# EUROPÄISCHE PATENTANMELDUNG

(11) **EP 1 225 122 A2**
(43) Veröffentlichungstag der Anmeldung: **24.07.2002**
(21) Anmeldenummer: 01890325.2
(22) Anmeldetag: 23.11.2001
(51) Int. Cl.: B62K 15/00, B62K 3/00

(54) **Zusammenklappbarer Tretroller**

(30) Priorität: 17.01.2001 AT 722001
(71) Anmelder: Gattinger, Christian, 4694 Ohlsdorf (AT)
(72) Erfinder: Gattinger, Christian, 4694 Ohlsdorf (AT)
(74) Vertreter: Hübscher, Helmut, Dipl.-Ing.

(57) **Zusammenfassung**

Es wird ein zusammenklappbarer Tretroller, insbesondere für Kleinkinder, mit einem Trittbrett (1), mit einer Lenksäule (3), die um eine Lenkachse (9) drehbar gelagert ist, und mit einem zwischen Trittbrett (1) und Lenksäule (3) angeordneten Beschlag (8) beschrieben, der ein quer zur Lenkachse (9) verlaufendes Schwenklager für die Lenksäule (3) und eine Verriegelungseinrichtung für die Lenksäule (3) in ihrer Gebrauchslage bildet. Um vorteilhafte Konstruktionsbedingungen zu schaffen, wird vorgeschlagen, daß der Beschlag (8) mit der Lenkachse (3) als Anlenkachse am Trittbrett (1) angelenkt ist und daß die Verriegelungseinrichtung aus einer zumindest angenähert in Richtung der Lenkachse (9) verlaufenden Rastausnehmung (13) für einen mit Abstand von der Schwenkachse (11) des Schwenklagers angeordneten Rastansatz (14) der Lenksäule (3) und einem zur Rastausnehmung (13) parallelen Führungsschlitz (12) für die Schwenkachse (11) besteht, wobei die Rastausnehmung (13) am unteren Ausnehmungsende einen Einführschlitz (15) für den mit der Lenksäule (3) entlang einer Kreisbahn um die Schwenkachse (11) einschwenkbaren Rastansatz (14) aufweist.

## Beschreibung

Die Erfindung bezieht sich auf einen zusammenklappbaren Tretroller, insbesondere für Kleinkinder, mit einem Trittbrett, mit einer Lenksäule, die um eine Lenkachse drehbar gelagert ist, und mit einem zwischen Trittbrett und Lenksäule angeordneten Beschlag, der ein quer zur Lenkachse verlaufendes Schwenklager für die Lenksäule und eine Verriegelungseinrichtung für die Lenksäule in ihrer Gebrauchslage bildet.

Bei zusammenklappbaren Tretrollern ist es bekannt (DE 299 01 184 U1), die Lenksäule mit dem vorderen Laufrad um die Säulenachse als Lenkachse in einem Führungslager zu lagern, das mit Hilfe eines Tragarmes am Trittbrett angelenkt ist. Zu diesem Zweck ist am Trittbrett ein Beschlag befestigt, der den Tragarm in einem Schwenklager aufnimmt, dessen Schwenkachse quer zur Lenksäule verläuft. Zur Verriegelung des Tragarmes gegenüber dem Beschlag weist dieser eine zur Schwenkachse konzentrische Schlitzführung für einen den Tragarm in einem axialen Langloch durchsetzenden Riegelbolzen auf. Dieser federbelastete Riegelbolzen greift an den beiden Enden der Schlitzführung in radial einspringende Rastausnehmungen ein, so daß der Führungsarm sowohl in der Gebrauchsstellung der Lenksäule als auch in deren abgeklappten Schwenkstellung verriegelt wird. Eine solche technisch aufwendige Konstruktion eignet sich jedoch kaum für Tretroller, die insbesondere von Kleinkindern benützt werden.

Der Erfindung liegt somit die Aufgabe zugrunde, einen zusammenlegbaren Tretroller der eingangs geschilderten Art so auszugestalten, daß sich für das Abklappen der Lenksäule eine hinsichtlich der Konstruktion und der Handhabung einfache, für Kleinkinder geeignete Konstruktion ergibt.

Die Erfindung löst die gestellte Aufgabe dadurch, daß der Beschlag mit der Lenkachse als Anlenkachse am Trittbrett angelenkt ist und daß die Verriegelungseinrichtung aus einer zumindest angenähert in Richtung der Lenkachse verlaufenden Rastausnehmung für einen mit Abstand von der Schwenkachse des Schwenklagers angeordneten Rastansatz der Lenksäule und einem zur Rastausnehmung parallelen Führungsschlitz für die Schwenkachse besteht, wobei die Rastausnehmung am unteren Ausnehmungsende einen Einführschlitz für den mit der Lenksäule entlang einer Kreisbahn um die Schwenkachse einschwenkbaren Rastansatz aufweist.

Da zufolge dieser Maßnahmen die Anlenkachse des Beschlages am Trittbrett die Lenkachse bildet, kann die Lenksäule selbst um eine querverlaufende Schwenkachse im Beschlag abklappbar gelagert werden, was vorteilhafte Voraussetzungen für eine einfache Verriegelung der Lenksäule in der Gebrauchsstellung schafft, wenn die Lenksäule eine zusätzliche Verschiebebewegung gegenüber dem Beschlag ausführen kann. Zu diesem Zweck wird die Schwenkachse in einem Führungsschlitz gehalten, der zumindest in der Gebrauchslage der Lenksäule angenähert in Richtung der Lenkachse verläuft. Die mit dieser Schlitzführung der Schwenkachse ermöglichte Längsbewegung der Lenksäule erlaubt deren einfache Verriegelung, wenn mit entsprechendem Abstand von der Schwenkachse eine zu deren Schlitzführung parallele Rastausnehmung für einen Rastansatz an der Lenksäule vorgesehen ist. Wird der Rastansatz durch einen Einführschlitz an einem Ausnehmungsende der Rastausnehmung um die Schwenkachse der Lenksäule gegen die Rastausnehmung verschwenkt, so kann beim Erreichen der Rastausnehmung die Lenksäule in Richtung der Rastausnehmung verschoben werden, so daß der Rastansatz der Lenksäule in die Rastausnehmung des Beschlages eingreift und die Lenksäule gegen ein Verschwenken um die Schwenkachse verriegelt. Da der Einführschlitz für den Rastansatz am unteren Ausnehmungsende der Rastausnehmung vorgesehen ist, muß zur Verriegelung der Lenksäule in ihrer Gebrauchsstellung diese nach oben in Richtung der Lenkachse verschoben werden. Dies bedeutet, daß bei einer Belastung des Trittbrettes des Tretrollers der Rastansatz der Lenksäule in die Rastausnehmung eingedrückt wird, was eine unbeabsichtigte Entriegelung des Schwenklagers der Lenksäule während der Rollerbenützung ausschließt. Zur Entriegelung des Schwenklagers zum Abklappen der Lenksäule ist ja das Trittbrett mit dem angelenkten Beschlag gegenüber der Lenksäule anzuheben, um den Rastansatz der Lenksäule aus der Rastausnehmung in den Bereich des Einführschlitzes zu verschieben und dann die Lenksäule gegen das Trittbrett um die Schwenkachse abzuklappen.

Obwohl die Rastausnehmung des Beschlages grundsätzlich auch oberhalb der Schwenkachse vorgesehen werden kann, ergeben sich günstige Konstruktionsbedingungen, wenn die Rastausnehmung mit Abstand unterhalb der Schwenkachse liegt, weil in diesem Fall die Bauhöhe des Beschlages klein gehalten werden kann. Außerdem eröffnet sich bei dieser Anordnung der Rastausnehmung unterhalb der Schwenkachse die Möglichkeit, die Achse des Laufrades bzw. der Laufräder der Lenksäule als Rastansatz auszunützen, so daß sich gesonderte Rastansätze an der Lenksäule erübrigen.

In der Zeichnung ist der Erfindungsgegenstand beispielsweise dargestellt.

Es zeigen
- Fig. 1: einen erfindungsgemäßen zusammenklappbaren Tretroller in der verriegelten Gebrauchsstellung in einer zum Teil aufgerissenen Seitenansicht und
- Fig. 2: diesen Tretroller in einer abgeklappten Transportstellung.

Gemäß dem dargestellten Ausführungsbeispiel weist der für Kleinkinder entworfene Tretroller ein Trittbrett 1 mit einem hinteren Laufradpaar 2 und eine Lenksäule 3 mit Griffen 4 auf, die ein vorderes Laufradpaar 5 trägt. Das Trittbrett 1 besteht aus einer Trittfläche 6 und einem Trittflächenträger 7 aus einer Hartholzleiste, auf der nicht nur das hintere Laufradpaar 2 sondern auch die Lenksäule 3 gelagert sind. Zur Lenksäulenlagerung dient ein Beschlag 8, der um eine im wesentlichen vertikale Achse drehbar am Trittbrettträger angelenkt ist, die als Lenkachse 9 dient, um die die Lenksäule 3 mit dem vorderen Laufräderpaar 5 zur Lenkung des Tretrollers gedreht werden kann.

Die Lenksäule 3 ist um eine zur Achse 10 des vorderen Laufräderpaares 5 parallele Schwenkachse 11 abklappbar im Beschlag 8 gehalten. Diese im Ausführungsbeispiel die Lenksäule 3 durchsetzende Schwenkachse 11 ist in einem Führungsschlitz 12 des die Lenksäule 3 mit zwei Seitenwangen beidseits umschließenden Beschlag 8 in Richtung der Lenkachse 9 verschiebbar im Beschlag 8 gelagert, der mit Abstand unterhalb der Schwenkachse 11 eine zum Führungsschlitz 12 parallele Rastausnehmung 13 für einen Rastansatz 14 der Lenksäule 3 bildet, der gemäß dem Ausführungsbeispiel aus der Achse 10 des vorderen Laufradpaares 4 besteht. Zur Einführung des Rastansatzes 14 bzw. der Radachse 10 in die Rastausnehmung 13 dient ein am unteren Ausnehmungsende vorgesehener Einführschlitz 15, der konzentrisch zur Schwenkachse 11 verläuft, wenn sich diese im Bereich des unteren Endes des Führungsschlitzes 12 befindet.

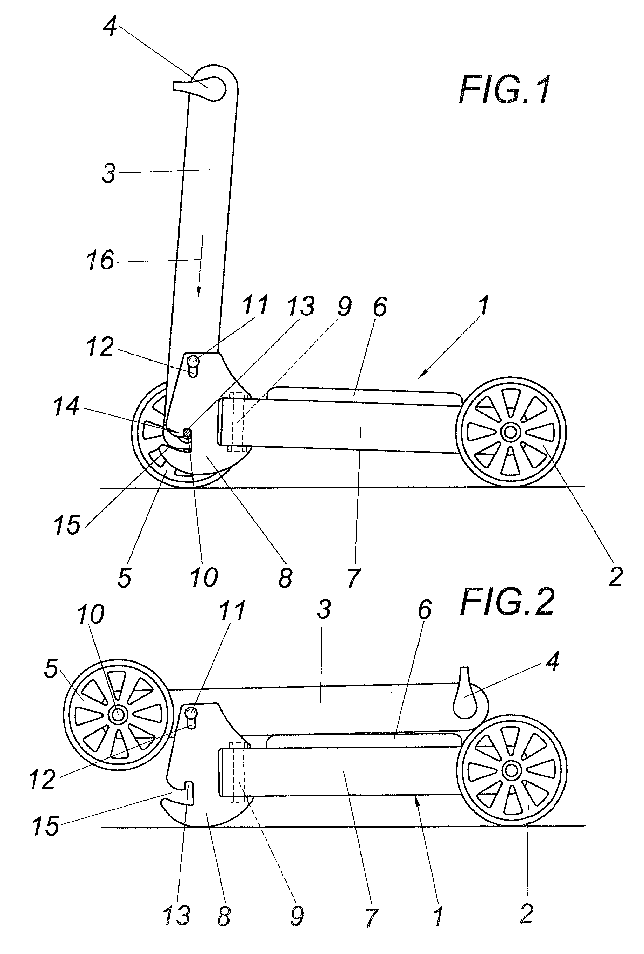

Soll die Lenksäule 3, die wie der Trittbrettträger 7 aus einer Hartholzleiste bestehen kann, aus der in der Fig. 1 gezeichneten verriegelten Gebrauchslage in eine abgeklappte Transportstellung nach der Fig. 2 abgeschwenkt werden, so ist zunächst die Lenksäule 3 gegenüber dem Trittbrett 1 in Richtung des Pfeiles 16 nach unten zu verschieben, wobei die Schwenkachse 11 innerhalb des Führungsschlitzes 12 und die Radachse 10 innerhalb der Ausnehmung 13 abwärts gleiten, bis die Schwenkachse 11 am unteren Ende der Schlitzführung 12 anschlägt und die Radachse 10 über den Einführschlitz 15 aus der Rastausnehmung 13 ausgeschwenkt werden kann, wenn die Lenksäule 3 in die Transportstellung nach der Fig. 2 abgeklappt wird. Zum Verriegeln der aus der Transportstellung in die Gebrauchsstellung hochgeschwenkten Lenksäule 3 ist lediglich das Trittbrett 1 gegenüber der über das Laufradpaar 5 am Boden abgestützten Lenksäule 3 nach unten zu bewegen, sobald die Radachse 10 nach dem Hochschwenken der Lenksäule 3 in den Bereich der Rastausnehmung 13 gelangt. Diese Verriegelungsbewegung kann in einfacher Weise durch ein Auftreten auf das Trittbrett 1 vorgenommen werden.

Die Erfindung ist selbstverständlich nicht auf das dargestellte Ausführungsbeispiel beschränkt. So könnte die unverschiebbar im Beschlag 8 gehaltene Schwenkachse 11 in eine Schlitzführung der Lenksäule 3 eingreifen oder das Laufradpaar 5 im Beschlag 8 gelagert sein. Selbstverständlich ist es auch möglich, anstelle der Laufradpaare einzelne Laufräder vorzusehen.

## Patentansprüche

1. Zusammenklappbarer Tretroller, insbesondere für Kleinkinder, mit einem Trittbrett (1), mit einer Lenksäule (3), die um eine Lenkachse (9) drehbar gelagert ist, und mit einem zwischen Trittbrett (1) und Lenksäule (3) angeordneten Beschlag (8), der ein quer zur Lenkachse (9) verlaufendes Schwenklager für die Lenksäule (3) und eine Verriegelungseinrichtung für die Lenksäule (3) in ihrer Gebrauchslage bildet, **dadurch gekennzeichnet, daß** der Beschlag (8) mit der Lenkachse (3) als Anlenkachse am Trittbrett (1) angelenkt ist und daß die Verriegelungseinrichtung aus einer zumindest angenähert in Richtung der Lenkachse (9) verlaufenden Rastausnehmung (13) für einen mit Abstand von der Schwenkachse (11) des Schwenklagers angeordneten Rastansatz (14) der Lenksäule (3) und einem zur Rastausnehmung (13) parallelen Führungsschlitz (12) für die Schwenkachse (11) besteht, wobei die Rastausnehmung (13) am unteren Ausnehmungsende einen Einführschlitz (15) für den mit der Lenksäule (3) entlang einer Kreisbahn um die Schwenkachse (11) einschwenkbaren Rastansatz (14) aufweist.

2. Zusammenklappbarer Tretroller nach Anspruch 1, **dadurch gekennzeichnet, daß** die Rastausnehmung (13) mit Abstand unterhalb der Schwenkachse (11) angeordnet ist.

3. Zusammenklappbarer Tretroller nach Anspruch 2, **dadurch gekennzeichnet, daß** die Achse (10) des Laufrades der Lenksäule (3) den in die Rastausnehmung (13) des Beschlages (8) eingreifenden Rastansatz (14) bildet.
